# EUROPEAN PATENT APPLICATION

(11) **EP 1 849 385 A2**
(43) Date of publication of application: **31.10.2007**
(21) Application number: 07102051.5
(22) Date of filing: 09.02.2007
(51) Int. Cl.: A47J 27/00, A47J 36/02

(54) **Cookware container for induction plates**

(30) Priority: 10.02.2006 IT BS20060025
(71) Applicant: Pentolpress S.r.l., 25068 Sarezzo BS (IT)
(72) Inventor: Borghesi, Lorenzo, 25068 Sarezzo (Brescia) (IT)
(74) Representative: Crippa, Paolo Ernesto

(57) **Abstract**

The object of the present invention is a cookware container (1) for induction plates, for example a pan, a frying pan, a saucepan, a grill or a coffee maker. The container comprises a container body (2) having a side wall (4), a bottom (6) and four inserts (20) arranged radially on the bottom. The inserts are made of ferromagnetic material, for example stainless steel, for converting the electromagnetic energy into heat. The inserts are coupled to the bottom so as to leave at least one expansion direction free, for allowing the free expansion of the insert by heating.

## Description

The object of the present invention is a cookware container for induction plates, for example a pan, a frying pan, a saucepan, a grill or a coffee maker. In particular the object of the present invention is a container suitable for being placed on an induction plate for carrying out the induction cooking of food or, more in general, for warming, for example water.

It is known that an induction plate is provided with a support surface for the pan and a device suitable for generating electromagnetic waves. Such waves impinge a portion of the pan made of ferromagnetic material, so that the electromagnetic waves generate internal passive currents capable of heating the ferromagnetic portion and the entire pan.

The solutions currently known for induction cooking containers generally have a container body made of a first material, generally an aluminium alloy or similar alloys, and a plate of ferromagnetic material, generally stainless steel, arranged on the bottom of the container and intended to be placed on the induction plate.

Some embodiments of the above type are known, for example, from documents US 5,711,290, EP 0451033, FR 2693093, EP 0534202, FR 2689748 and WO 96/06552.

However, such solutions have some disadvantages.

In fact, it has been noted that due to the difference in the thermal expansion characteristics of the two materials contacting at the bottom of the container, that is, the aluminium alloy and stainless steel, the plate tends to detach from the bottom of the container.

The object of the present invention is to make a cookware container for induction plates which should overcome the disadvantages mentioned above while meeting the above requirements.

Such object is achieved by a container made according to claim 1. The dependent claims describe embodiment variations.

The description hereinafter refers, by way of an example, to a pan but the innovative idea is understood to be protected also for other cookware containers, such as a frying pan, a saucepan, a grill or a coffee maker.

The description hereinafter refers to the annexed figures, wherein:

- figure 1 shows a perspective exploded view of a container according to the present invention, in accordance with an embodiment;

- figure 2 shows a perspective view of the container of figure 1, with coupled parts;

- figures 3a and 3b respectively show a perspective view and a plan view of a insert of the container of figure 1;

- figure 4 shows a perspective view of the container according to the present invention, in accordance with a further embodiment;

- figure 5 shows a plan view of the container of figure 4, and

- figure 6 shows a perspective view of an insert of the container of figure 4.

With reference to the annexed figures, reference numeral 1 globally denotes a cookware container for induction plates.

Container 1 comprises a container body 2 comprising a side wall 4 suitable for determining a cooking space for containing food to be cooked or water to be warmed. Said side wall 4 develops annularly about a container axis X-X.

Moreover, container 1 comprises a bottom 6, jointed to said side wall 4, suitable for being placed on an induction plate.

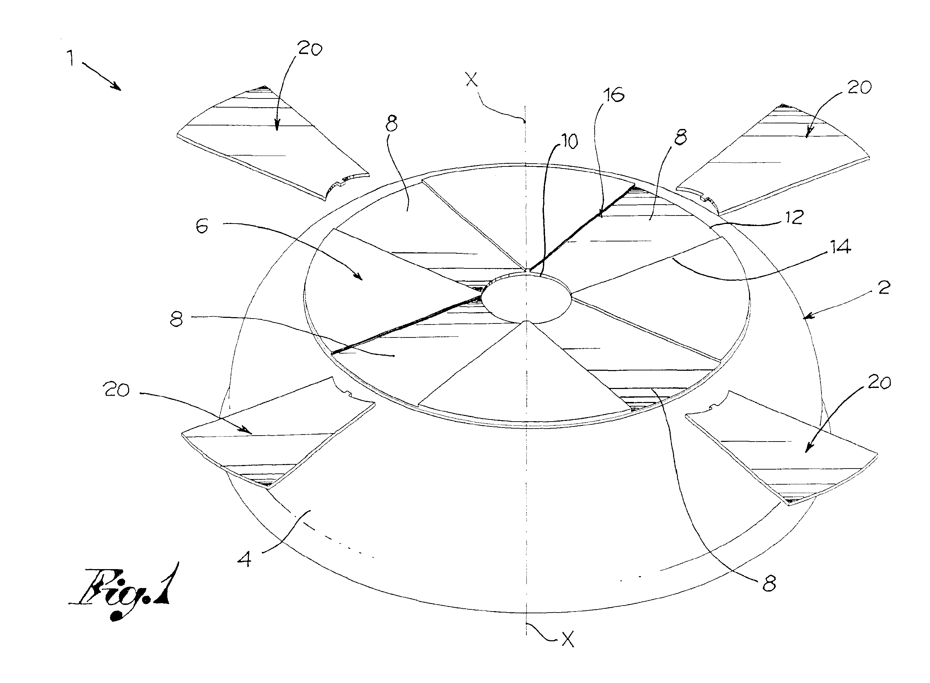

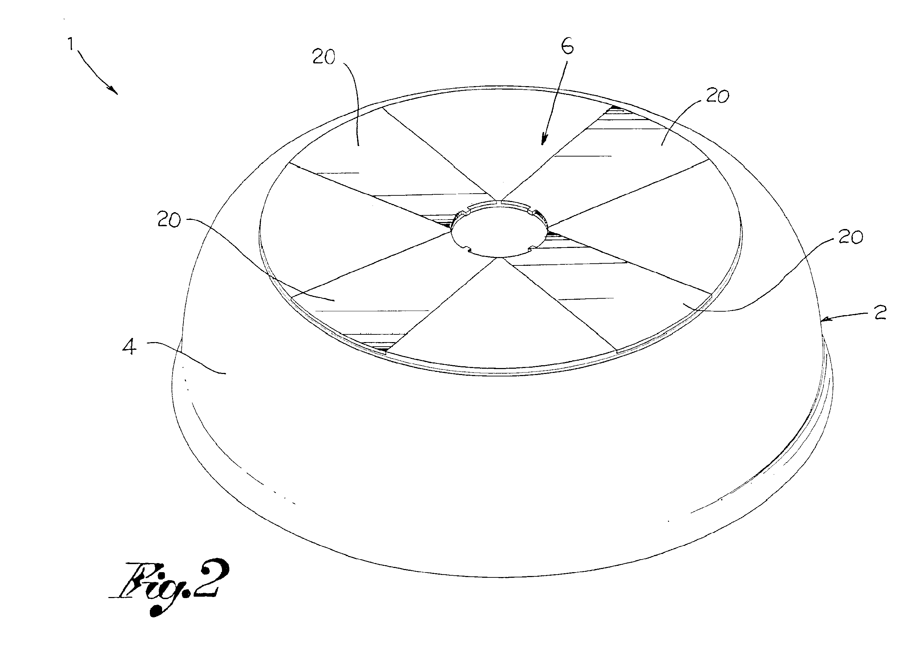

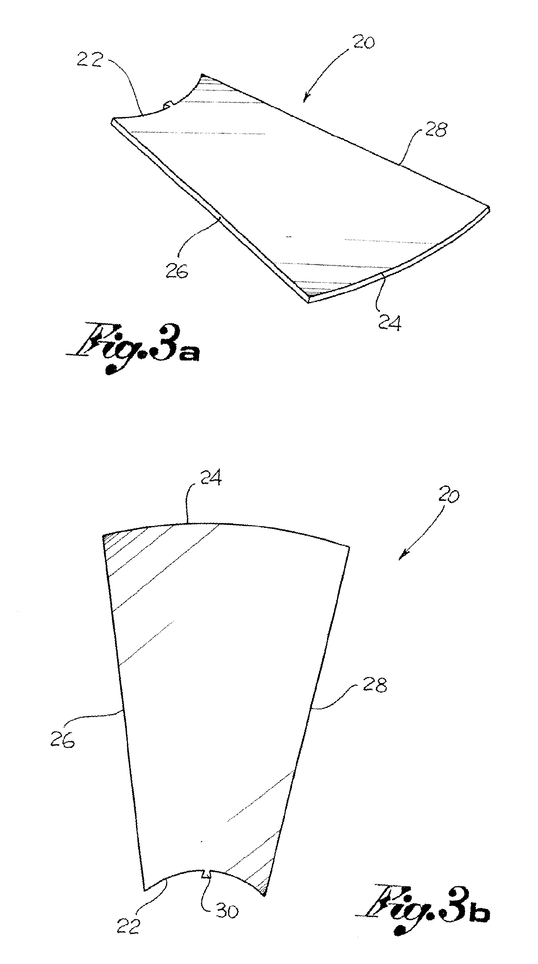

In accordance with a preferred embodiment, bottom 6 of container body 2 has at least one groove 8, for example extending radially from the centre of the bottom towards the periphery of the same (figures 1 to 3b).

Preferably, said grooves are arranged in position diametrically opposite the container axis X-X and are in a number of three or four.

In accordance with a further embodiment, said grooves are in a number of three or five, angularly equally spaced.

Preferably, said groove 8 has a circular sector shape, determined by an internal circumferential side 10, close to the centre of bottom 6, and an external circumferential side 12, close to the periphery of bottom 6, and radial sides 14, 16, that delimit it circumferentially.

Container 1 further comprises an insert 20, for example suitable for being seated, at least partly, in said groove 8.

Insert 20 is made of a ferromagnetic material so that, impinged by an electromagnetic field, it generates heat and warms up. The heat is transmitted by contact to the container body 2.

Preferably, insert 20 has a circular sector shape, delimited by an internal circumferential edge 22, an external circular edge 24 and radial edges 26, 28 that delimit it circumferentially.

Insert 20 is inserted in groove 8 of bottom 6 and constrained thereto so as to leave at least one expansion direction free, that is, without constraints.

For example insert 20 couples with grooves 8 through a shape coupling, of the dovetail type, obtained between the radial ends 14, 16 of groove 8 and the respective radial edges 26, 28 of insert 20.

The shape coupling allows constraining insert 20 to bottom 6 in the circumferential direction and in that of said container axis X-X.

Moreover, insert 20 comprises a tooth 30, preferably protruding from said internal circumferential edge 22. Tooth 30 is suitable for being deformed, for example folded, to engage with a step obtained at the centre of bottom 6.

The constraint obtained by tooth 30 engaged with bottom 6 locks insert 20 in the radial direction, in the direction facing the centre of bottom 6.

In other words, the radial direction in the direction facing the periphery of the bottom, is not constrained for insert 20, so that along said direction a non-constrained expansion of the insert, when warmed, is obtained. For said insert 20, said radial direction realises said expansion direction.

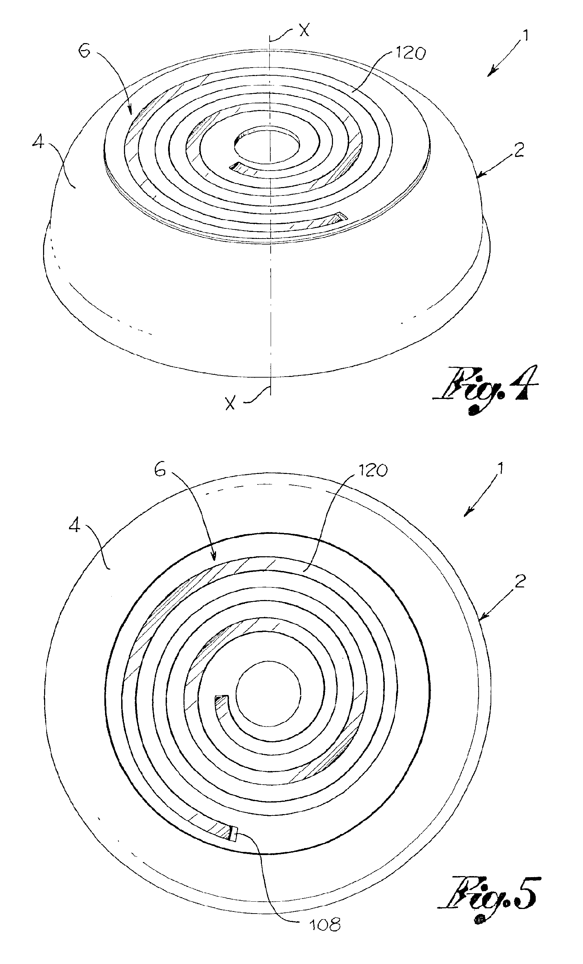

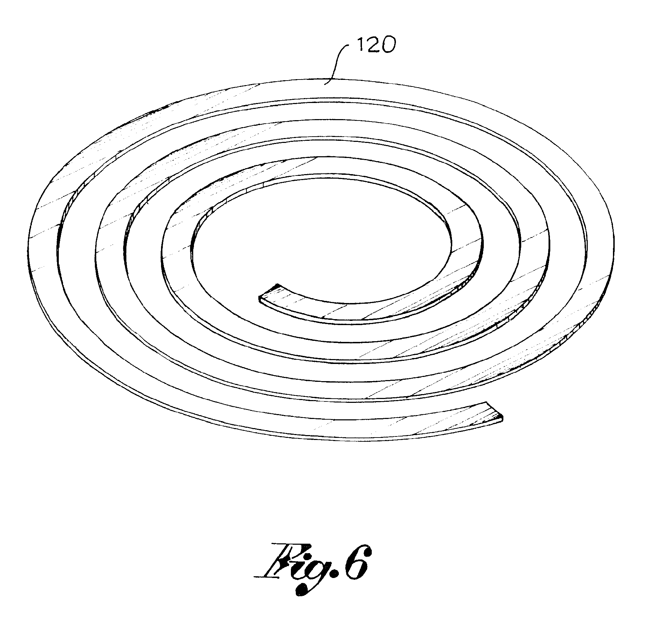

In a further embodiment, said container body 2 exhibits a spiral groove 108 on bottom 6, which wounds in turns from the centre of bottom 6 towards the periphery of the same (figures 4 to 6).

Said container 1 further comprises an insert 120, also made with a spiral shape, suitable for being seated, at least partly, in said groove 108.

Insert 120 is coupled to groove 108 so as to constrain the movement of the insert along a direction perpendicular to the centre line axis of the spiral and along a direction parallel to said container axis X-X.

Groove 108, however, has a spiral length greater than the length of the insert spiral, so along the extension direction of the spiral itself, there occurs an expansion of the insert.

As is understood, insert 20, 120 is an example of embodiment of conversion means suitable for generating a quantity of heat when impinged by an electromagnetic field, by virtue of the make in ferromagnetic material, and for transmitting said quantity of heat to said container body 2, by contact therewith.

Moreover, said insert 20, 120 and said groove 8, 108 form conversion means suitable for freely expanding by heating, since at least along an expansion direction or at least along one direction of said expansion direction, there is no constraint, so the insert expands freely.

Container 1 can be made in accordance with a manufacturing method comprising the steps of:

- providing said container body 2 comprising said side wall 4 and said bottom 6;

- providing said insert 20, 120 of ferromagnetic material;

- coupling said insert with said container body leaving said insert free at least along an expansion direction.

Preferably, moreover, said method comprises a step of arranging at least one of said grooves 8, 108 on bottom 6 of said container body 2.

Moreover, said coupling step comprises the step of inserting said insert 20, 120 in said groove 8, 108.

In particular, said coupling step comprises a step of radially pushing at the same time inserts 20 arranged diametrically opposite.

Preferably, said step of arranging said groove 8, 108 comprises a step of removing an amount of material from bottom 6 of container body 2, for example by tool milling.

Preferably, moreover, said step of providing said insert 20, 120 comprises a step of carrying out an anti-oxidant metallurgic treatment, for example phosphating, on said insert 20, 120.

Unusually, the cookware container for induction plates according to the present invention allows overcoming the problem of the tendency to detach between the steel plate and the aluminium bottom of a conventional pan, frying pan, saucepan, grill or coffee maker.

Advantageously, moreover, the manufacture of said container is simple and quick, thereby contributing to lower the production costs.

According to a further advantageous aspect, the inserts are subject to a metallurgic treatment, for example phosphating, suitable for preventing or limiting the onset of undesired oxidation phenomena.

According to an even further advantageous aspect, said inserts, suitably treated, are connectable to the container body making the end product, without the need of further finishing processes.

It is clear that a man skilled in the art can make changes and adjustments to the container described above in order to meet specific and incidental needs, all falling within the scope of protection defined in the following claims.

## Claims

1. Cookware container (1) for induction plates comprising:
- a container body (2) comprising
a) a side wall (4) suitable for determining a containment space, wherein said side wall develops annularly about a container axis (X-X),
b) a bottom (6), jointed to said side wall (4), suitable for being placed on a cooking plate;
- conversion means suitable for generating a quantity of heat when impinged by an electromagnetic field and for transmitting said quantity of heat to said container body (2) ;
said container being **characterised in that**
said conversion means are further suitable for freely expanding by heating.

2. Container according to claim 1, wherein said conversion means comprise at least one insert (20, 120) of ferromagnetic material, partly constrained to said container body (2) and free along at least one expansion direction.

3. Container according to claim 2, wherein said conversion means further comprise at least one space (8, 108) suitable for seating at least partly said insert (20, 120).

4. Container according to claim 3, wherein said space (8, 108) is obtained in the bottom (6) of said container body (2) .

5. Container according to claim 4, wherein said bottom (6) has a top surface, facing said containment space, and a contact surface, intended for facing the cooking plate, said space consisting of a groove (8, 108) obtained on said contact surface of the bottom (6).

6. Container according to any one of claims 3 to 5, wherein said insert (20) and said space (8) couple by a shape coupling that leaves at least said expansion direction free from constraints.

7. Container according to claim 6, wherein said insert (20) and said space (8) are coupled by a dovetail coupling.

8. Container according to any one of claims 3 to 7, wherein said space (8) has a direction substantially radial relative to said container axis (X-X).

9. Container according to claim 8, wherein said space (8) enlarges from an end close to the centre of the bottom towards the periphery of said bottom.

10. Container according to claim 9, wherein said space (8) has radial sides (14, 16) that delimit it circumferentially, substantially rectilinear.

11. Container according to claim 10, wherein said space (8) and said insert (20) couple by a dovetail coupling obtained along said radial sides (14, 16).

12. Container according to any one of claims 8 to 11, wherein said spaces (8) are arranged diametrically opposite.

13. Container according to claim 12, wherein said spaces (8) are in a number of at least two.

14. Container according to claim 13, wherein said spaces (8) are in a number of four.

15. Container according to any one of claims 2 to 14, wherein said insert (20) comprises a tooth (30) suitable for being deformed for constraining said tooth (30) to the container body.

16. Container according to claim 15, wherein said insert (20) has circular sector shape, delimited by an internal circumferential edge (22) and an external circumferential edge (24) that delimit it radially, and radial edges (26, 28) that delimit it circumferentially, said tooth (30) being protruding from said internal circumferential edge (22).

17. Container according to any one of claims 2 to 7, wherein said insert (120) has a spiral configuration.

18. Container according to any one of claims 3 to 7, wherein said space (108) is a groove having a spiral configuration.

19. Container according to claims 17 and 18, wherein said spiral space has an overall length of the spiral greater than the overall length of the spiral insert, for allowing said free expansion.

20. Method for manufacturing a cookware container for induction plates, comprising the steps of:
- providing a container body (2) comprising a side wall (4) and a bottom (6);
- providing an insert (20, 120) of ferromagnetic material;
- coupling said insert with said container body leaving said insert free at least along an expansion direction.

21. Method according to claim 20, comprising a step of arranging at least one groove (8, 108) on the bottom (6) of said container body (2).

22. A method according to claim 21, wherein said coupling step comprises the step of inserting said insert (20, 120) in said groove (8, 108).

23. Method according to claim 22, wherein said coupling step comprises a step of radially pushing at the same time inserts (20) arranged diametrically opposite.

24. Method according to claim 21 or 22 or 23, wherein said step of arranging said groove comprises a step of removing an amount of material from the bottom (6) of the container body (2).

25. Method according to claim 24, wherein said removal step comprises a step of tool milling.

26. Method according to any one of claims 20 to 25, wherein said step of providing said insert (20, 120) comprises a step of carrying out an anti-oxidant metallurgic treatment on said insert (20, 120).
